# FASCICULE DE BREVET EUROPEEN

(11) **EP 1 736 601 B1**
(45) Date de publication et mention de la délivrance du brevet: **19.09.2007**
(21) Numéro de dépôt: 05364018.1
(22) Date de dépôt: 22.06.2005
(51) Int. Cl.: E01B 7/10, B23P 6/04, B23K 9/04, B23K 9/00

(54) **Procédé de renovation de coeurs de voie par rechargement utilisant le soudage à l'arc et un refroidissement combinés**
Renovation method for frogs by arc welding build up in combination with cooling
Renovierungsverfahren für Herzstücke unter Verwendung von kombinierten Lichtbogenauftragschweissen und Kühlung

(43) Date de publication de la demande: 27.12.2006
(73) Titulaire: Dages, Didier, F-22360 Langueux (FR)
(72) Inventeur: Dages, Didier, F-22360 Langueux (FR)
(74) Mandataire: Lavialle, Bruno François Stéphane

(56) Documents cités:
- WO-A-97/18921
- DE-A1- 2 539 944
- FR-A- 2 265 493
- GB-A- 2 007 257
- RU-C1- 2 136 462
- US-A- 2 038 178
- US-A- 2 688 180
- US-A- 3 708 856

## Description

La présente invention se rapporte à un procédé de rénovation des coeurs de croisement ou de traversée conformément au préambule de la revendication 1 (voir, par exemple, US 3708 856 A).

Ces pièces sont, avec les aiguilles auxquelles elles sont associées dans la constitution des appareils de voie, les principales pièces d'usure des réseaux ferroviaires.

Les coeurs permettent soit, pour les coeurs de traversée, le croisement de deux voies distinctes, soit, pour les coeurs de croisement, les plus fréquents, le franchissement par les roues des convois ferroviaires de la zone où se croisent la voie déviée et la voie principale dans un appareil de voie.

La technologie qui donne les meilleurs résultats en termes de sécurité, de durée de vie et de coût est un coeur de voie dit « coeur soudé » constitué d'une pièce moulée en acier austénitique à haute teneur en manganèse - du type acier Hadfield - dont les quatre extrémités sont soudées à des antennes, c'est à dire des tronçons de rail en acier au carbone, via des inserts en acier austéno-ferritique à bas carbone.

Le choix d'un matériau en acier à haute teneur en manganèse est lié aux propriétés remarquables de résistance aux chocs et à l'usure par l'aptitude à l'écrouissage et au durcissement superficiel tout en conservant ténacité et souplesse pour un coût qui reste cependant modéré.

Le coeur ainsi réalisé est raccordé au reste du réseau par 4 soudures alumino-thermiques ( d'où son appellation de coeur soudé).

Le soudage des coeurs remplace de plus en plus la liaison par éclissage des coeurs au réseau car les portées et les trous d'éclissages des extrémités du coeur subissent des détériorations rendant nécessaire le remplacement des coeurs. La soudure assure par ailleurs la continuité métallique du coeur avec le reste du réseau, ce qui améliore le confort de roulement et la sécurité de transmission d'informations de nature électrique.

Dans la suite de cette description, l'acier à haut manganèse de type Hadfield constituant la matière du coeur de voie obtenu par moulage est appelé métal de base.

La tendance à l'augmentation de la vitesse et des charges des convois ferroviaires soumet les coeurs de voie à des sollicitations répétées et de plus en plus sévères de chocs, notamment lors de la retombée de roue dans la zone dite d'abaissement de pointe, de frottements, de glissements et à des contraintes alternées de traction-compression ou de flexion.

Ces conditions de service exigeantes entraînent la formation d'avaries et, à terme, la dépose et le remplacement du coeur. Ces avaries sont essentiellement de deux types, à savoir une usure localisée et une fissuration du coeur de voie.

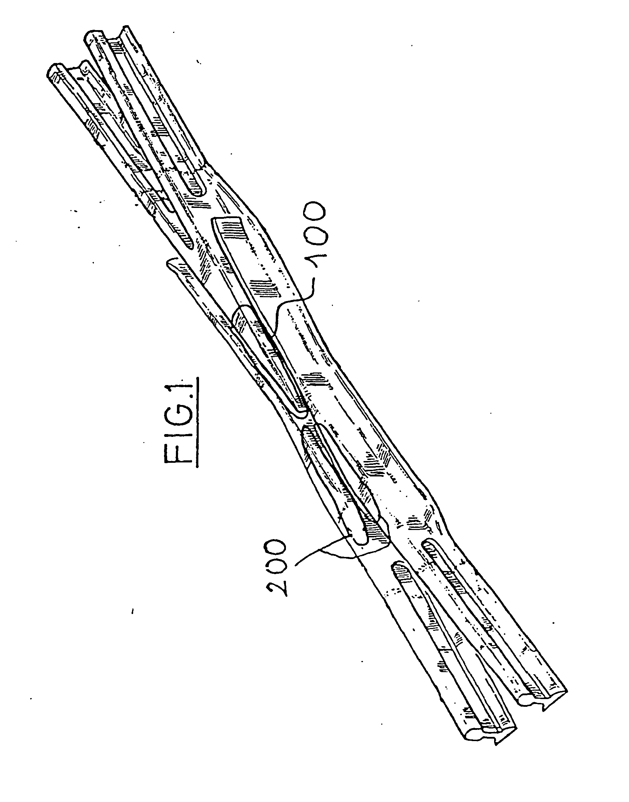

L'usure est principalement localisée dans la zone dite de pointe ou "d'abaissement de pointe" et dans les pattes de lièvre. Cette usure correspond à des arrachements, des écaillages, des enlèvements ou tassements, et des déformations du métal de base qui entraînent une altération de la géométrie du coeur telle que celui-ci n'est plus à même d'assurer en toute sécurité sa fonction de transfert, en particulier le franchissement par la roue de convoi de la lacune située entre pattes de lièvre et abaissement de pointe. Cette usure se rencontre principalement dans les zones du coeur circulées par les roues des convois ferroviaires ou à proximité immédiate des zones circulées. Pour expliciter ces zones d'usure, la figure n°1 représente une vue en perspective d'un coeur de croisement, type de coeur à une seule pointe beaucoup plus fréquent que le coeur de traversée qui comporte lui 2 pointes: la zone repérée 100 est la pointe du coeur ou "abaissement de pointe" et les 2 pattes de lièvre forment la zone repérée 200. Pour des raisons de sécurité de fonctionnement liées à la nature géométrique d'un coeur, le franchissement de la lacune (zone située entre la pointe et les pattes de lièvre) devant se faire avec une retombée de la roue de convoi dans la zone de pointe, du bon côté et en évitant que le flanc de bandage ne vienne talonner en fond d'ornière, cette usure n'affecte cependant qu'une épaisseur très limitée, de l'ordre de quelques millimétres à un ou deux centimètres, dans des zones limitées de la pièce. Lors du démontage pour remplacement d'un coeur, la partie qui a été enlevée par usure ne représente donc qu'une très faible partie - moins de quelques dizaines de kilogramme environ - du poids initial de la pièce moulée, supérieur à environ une tonne. Cette limitation d'usure différencie très nettement cet usage de l'acier à haute teneur en manganèse d'un autre usage bien connu de cet acier, les pièces d'usure de concasseurs giratoires et broyeurs à mâchoires : dans ce cas en effet, les pièces en acier à haute teneur en manganèse utilisées peuvent être usées de manière beaucoup plus accentuée avant démontage de remplacement.

La fissure est une déchirure localisée et plus ou moins profonde du métal de base, démarrant le plus souvent dans des zones fortement exposées aux chocs ou sollicitées par des contraintes alternées de traction-compression ou de flexion et/ou des zones où préexistent des imperfections métallurgiques inhérentes au procédé de fonderie telles que par exemple desserrement de grain, inclusions, ségrégation de solidification. Lorsque la ou les fissures atteignent une taille et une géométrie critique trop importante, le coeur doit être déposé et remplacé. Les avaries n'ont pas forcément une localisation dans les seules zones circulées ou à proximité de ces zones circulées : on peut en rencontrer notamment dans des zones proches des semelles d'appui des coeurs sur les traverses de voie ou sur les parties verticales des flancs du coeur.

Ainsi qu'exposé précédemment, l'acier à haut manganèse de type Hadfield a des caractéristiques mécaniques remarquables - notamment l'aptitude au durcissement superficiel par écrouissage - ainsi qu'un coût de production modéré qui en font un des meilleurs matériaux pour cette application ; mais il présente toutefois, en particulier du fait de sa teneur en carbone élevée, une soudabilité très médiocre.

Aucun processus fiable de réparation des fissures n'a été décrit compte tenu des difficultés ci-avant ; certaines descriptions font état de soudage selon les bonnes pratiques de soudure alors que leur mise en oeuvre qui comprend le maintien du coeur, durant les opérations de soudage, dans un bain d'eau légèrement en dessous des zones à souder, ne peut manifestement pas s'appliquer à des fissures traversantes. Ce terme de bonne pratique de soudure est sans valeur pratique lorsque on sait que l'acier Hadfield a un comportement radicalement différent de la quasi totalité des autres aciers qualifiés de difficilement soudables à cause de leur carbone équivalent élevé ( supérieur à 0,5% ).

Il est connu du document US n°3 821 840 un procédé de rechargement des zones usées des coeurs recherchant une productivité unitaire maximale du dépôt de soudure et utilisant des dépôts de cordons longitudinaux sur toute la longueur de zone à recharger. Le coeur est maintenu, durant les opérations de soudure, dans un bain d'eau de niveau légèrement en dessous des zones à souder. Ce procédé présente plusieurs inconvénients :
- une déformation longitudinale importante du coeur, voire un vrillage, lors du retrait de refroidissement des cordons de soudure. Ce cintrage est compensé soit par une pré-déformation du coeur , avant et pendant soudure, dans le sens "convexe" inverse au sens de déformation "concave" généré lors du refroidissement des cordons de soudure longitudinaux ,soit par des entailles transversales faites dans les parties semelles et les flancs latéraux du coeur, voire des coupes transversales complètes qui sont ensuite ressoudées après redressage longitudinal du coeur. Ceci entraîne soit des systèmes complexes de fixation et de pré-déformation des coeurs pas toujours fiables soit des opérations supplémentaires de soudure et de redressage non négligeables. Ces opérations soumettent le coeur à des contraintes de déformation au delà de la limite élastique qui sont défavorables à sa tenue en service.
- une absence d'hypertrempe à l'eau du cordon de soudure déposé. La présence d'un bain d'eau de niveau légèrement en dessous des zones soudées assure une meilleure évacuation de chaleur et évite un échauffement préjudiciable au métal de base mais n'assure pas une hypertrempe à l'eau du cordon de métal déposé puisque ce dépôt est effectué au dessus du niveau de l'eau. La structure austénitique du métal à haut manganèse déposé n'est donc pas, après refroidissement, garantie.
- un fort risque de formation de fissures dans le métal de base, malgré le maintien à basse température par le bain d'eau, dû aux contraintes de retrait lors du refroidissement des cordons de soudure. Sur une grande longueur de cordon, ces contraintes peuvent localement dépasser la limite de rupture du métal de base; un cordon de 200mm de long déposé en une passe de soudure, ce qui n'est pas élevé en comparaison avec la longueur des zones usées à recharger, va se rétracter d'environ 5mm jusqu'à son refroidissement complet ce qui correspond à des efforts localisés de traction considérables sur le métal de base.

Dans certains cas, on utilise pour la réparation, un métal de nature différente du métal de base. Cette soudure dite hétérogène se pratique avec un acier de type "inox 18 - 8", à faible teneur pondérale en carbone ( < 0,07%), une teneur pondérale en chrome supérieure à 18% et en nickel supérieure à 8% avec éventuellement d'autres additifs(molybdène, manganèse ) à teneurs plus faibles. Ce métal d'apport a une très bonne capacité d'allongement à froid et à chaud qui minimise les tensions sur le métal de base mais il ne possède pas la même aptitude au durcissement superficiel qu'un acier de type Hadfield, d'où une usure nettement plus rapide des zones circulées ainsi réparées.

Un but de l'invention est de proposer un procédé permettant de rénover, pour un coût le plus souvent nettement inférieur à celui d'un coeur neuf, un coeur usagé et ceci avec toutes les garanties de sécurité nécessaires pour sa réutilisation dans des conditions similaires à celles d'un coeur neuf.

A cet effet, on prévoit, selon l'invention, un procédé de rénovation d'un coeur de voie en acier austénitique à haute teneur en manganèse, conformément à la revendication 1.

Ce procédé ne nécessite pas de système complexe de fixation très rigide et/ou de pré-déformation du coeur et garantit une structure austénitique au métal à haut manganèse déposé ainsi qu'une absence de risque de formation de fissures dans le métal de base. Sa productivité unitaire - le temps de rechargement de toutes les zones usées - est certes plus faible que celle des procédés précédents mais ceci est largement compensé par l'absence d'opérations de pré-déformation ou de création puis de ressoudure d'entailles, par la simplicité des systèmes de fixation et de manutention du coeur à hauteur de travail et par la possibilité de travailler en atelier alternativement sur plusieurs coeurs à la fois en passant de l'un à l'autre pour assurer détente et refroidissement.

D'autres avantages et caractéristiques ressortiront mieux à la lecture de la description détaillée qui suit d'un mode de réalisation particulier non limitatif de l'invention.

Il sera fait référence aux dessins annexés, parmi lesquels :
- la figure 1 est une vue en perspective d'un coeur de voie,
- la figure 2 est une coupe transversale de la cuvette de métal enlevé autour d'une fissure,
- la figure 3 est une coupe transversale montrant l'arrangement des cordons de soudure réalisant le remplissage de la cuvette,
- la figure 4 est une vue de dessus de la cuvette réalisée avec l'ajout d'une tôle de fermeture terminale dans le cas d'une fissure démarrant sur un bord de surface,
- la figure 5 est une vue latérale côté bord libre de la tôle de fermeture terminale pour une fissure démarrant sur un bord de surface,
- la figure 6 est une coupe transversale de la cuvette réalisée avec l'ajout d'une tôle de fond dans le cas d'une fissure débouchante,
- la figure 7 est une coupe transversale de la cuvette réalisée avec l'ajout d'une tôle de fond dans le cas d'une fissure dont le fond est à moins de 10mm de la surface inférieure,
- la figure 8 est un schéma d'enchaînement de l'ordre de dépôt des cordons transversaux pour le rechargement des zones usées.

Le procédé de soudure homogène à l'arc électrique est ici décrit en application à la réparation de fissures. Il comprend les étapes de :
- réaliser un ou des points d'arrêt à ou aux extrémités de la fissure, ou légèrement au delà de l'extrémité c'est à dire entre 2cm et 1,5 fois l'épaisseur locale en extrémité de fissure ; chaque point d'arrêt a la forme d'une cavité concave à bords arrondis, forme qui annule toute concentration de contrainte par effet d'angle et stoppe ainsi toute évolution de la fissure.
- créer, par enlèvement de métal autour de la fissure et ajout éventuel d'une tôle d'appui en acier Hadfield, une cuvette dont la géométrie, grâce à des rayons de courbure importants (supérieurs à 10mm) et un grand angle d'ouverture entre ses flancs (supérieur à 90°), va minimiser les tensions au retrait tant sur le métal de base que sur le métal de même nature rechargé par soudure à l'arc électrique.
- remplir cette cuvette à l'aide de cordons de soudure à l'arc électrique déposés en plusieurs étapes, chaque cordon ayant toujours une longueur individuelle relativement faible c'est à dire ne dépassant pas 10cm environ, et déposés suivant une règle d'alternance minimisant l'échauffement des couches de métal sous-jacent c'est à dire que les cordons déposés sont espacés latéralement d'environ 3 fois la largeur de cordon et que le recouvrement entre cordons ne se fait qu'après refroidissement complet des premiers cordons déposés.

Des analyses non destructives de teneur en phosphore dans différentes zones du coeur et notamment les zones de fissures à réparer sont réalisées avec un spectromètre portable correctement et régulièrement réétalonné; lorsque la teneur pondérale en phosphore dépasse 0,035%, des précautions complémentaires sont nécessaires car le phosphore fragilise fortement l'acier Hadfield.

Dans le cas de cavités dont la largeur d'ouverture dépasse 8cm environ ou si localement la teneur pondérale en phosphore dépasse 0,035%, une première couche de cordons dits "d'accrochage" est déposée sur les parties de la cuvette en métal de base en suivant l'axe de la cuvette ; cette première couche d'accrochage dilue le phosphore - le métal d'apport ayant une teneur en phosphore très faible c'est à dire inférieure à 0,01% - et permet de mettre en place un métal de type Hadfield moins sensible aux tensions de soudure.

Les couches successives de métal sont ensuite déposées transversalement à l'axe de la cuvette avec une géométrie non rectiligne à grand rayon de courbure, supérieur à 10 mm, dans la zone de raccordement entre flancs et fond.

Plus en détail, le procédé de l'invention débute par une opération de démontage en voie qui est réalisée en tronçonnant la soudure alumino-thermique de chaque antenne de façon à garder des dimensions d'antennes rigoureusement identiques à celles du coeur neuf, avec soit un jet d'eau haute pression ( supérieure à 1000 bars) ou avec une disqueuse muni d'un disque carbure fin avec arrosage liquide: ces 2 dispositifs correctement utilisés ont une découpe très nette, minimisent l'épaisseur du trait de découpe et ne créent pas d'échauffement préjudiciable à la structure métallurgique du rail.

Le coeur usagé démonté est amené en atelier où il subit un décapage complet de sa surface extérieure et intérieure (zone en regard avec le sol en position de service); un sablage est préférable à un grenaillage. Ce décapage est suivi d'un ressuage complet pour examiner la santé superficielle et en particulier pour visualiser toutes les fissures.

Les fissures sont réparées selon 3 cas de figure possibles.

Si la fissure est non traversante et ne démarre pas sur un bord de surface, des points d'arrêt sont réalisés à chaque extrémité de la fissure, à environ 2cm au delà de l'extrémité. En cas de difficulté d'accès pour réaliser les points d'arrêt par perçage avec un forêt carbure, on pré-perce par gougeage arc-air au petit crayon de 8mm jusqu'à créer un trou non débouchant de 20mm environ et d'un rayon de fond de 10mm environ dont la surface sera nettoyée par meulage fin. Selon la géométrie et les facilités d'accès, le métal de base est enlevé autour de la fissure par usinage ou meulage ou gougeage arc-air ; dans ce dernier cas, les passes de gougeage seront suffisamment espacées dans le temps pour limiter l'échauffement du métal de base et les surfaces finales nettoyées par meulage fin.

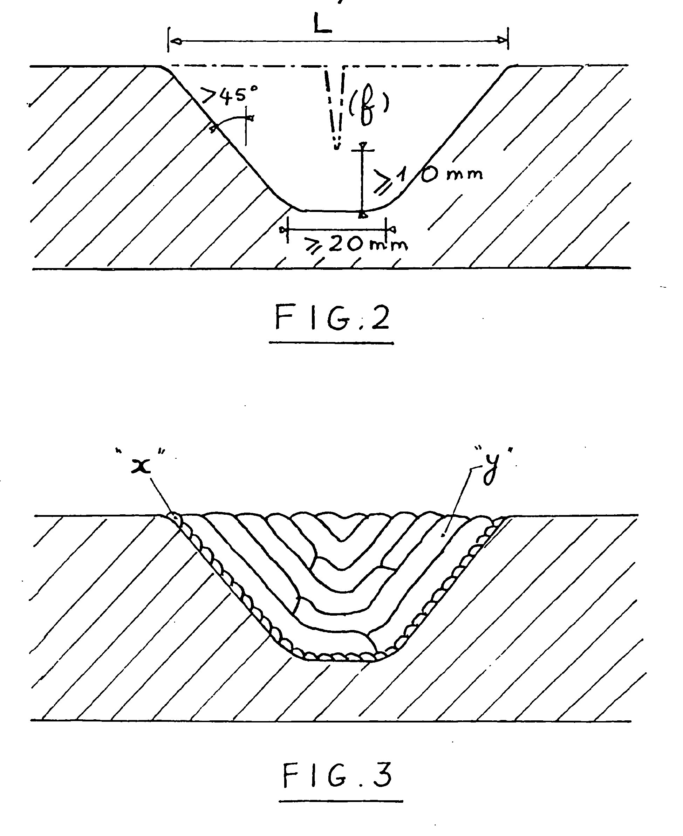

La figure n°2 représente une coupe transversale de la cuvette ainsi réalisée; la profondeur de cuvette est supérieure d'environ 10mm au fond de la fissure (f) d'origine. Le tracé en traits mixtes représente la géométrie du métal de base avant ouverture.

L'angle entre flancs de cuvette est supérieur à 90°, la largeur en fond de cuvette d'environ 20mm avec un grand rayon de raccordement , supérieur à 10mm, entre flancs et fond.

Si la largeur L maximale de cuvette dépasse 8cm environ et/ou si la teneur locale en phosphore dépasse 0,035%, on dépose une première couche de cordons "d'accrochage" sur les bords de la cuvette et suivant son axe; puis les couches successives de remplissage sont déposées transversalement à l'axe de la cuvette en suivant la géométrie incurvée du profil de cuvette.

La figure 3 représente une coupe transversale de la cuvette après remplissage avec l'architecture des cordons de soudure déposés ; les cordons d'accrochage sont symbolisés "x" et les couches de remplissage "y".

Si la fissure est non traversante et démarre sur un bord de surface, on procède de manière identique au cas précédent ; dans ce cas bien évidement il y a un seul point d'arrêt.

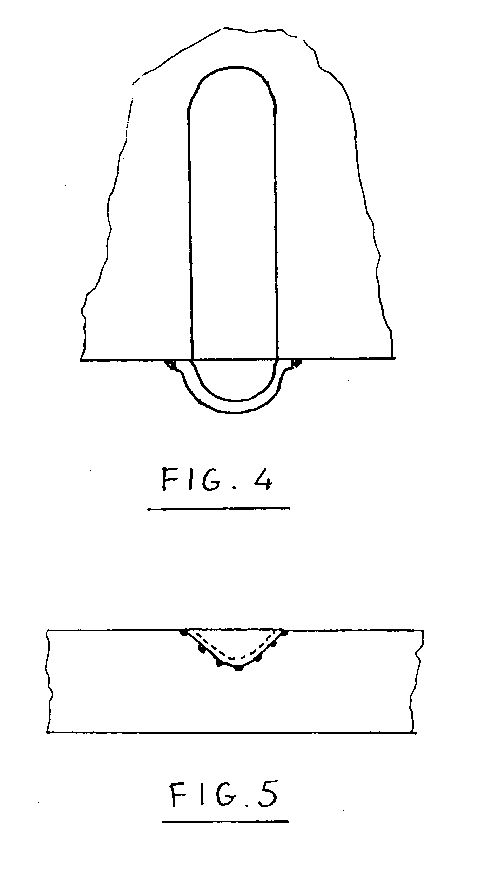

Lorsque l'ouverture de cuvette dans le métal de base est terminée, à l'extrémité de la cuvette débouchant sur le bord libre, on soude par points une tôle de "fermeture terminale" en acier Hadfield d'épaisseur minimale 3mm environ et préformée en forme de demi-entonnoir d'une pente de 50° environ qui se raccorde aux bords de la cuvette pour former une paroi de fermeture latérale de la cuvette; les figures n°4 et 5 montrent respectivement une vue de dessus et une vue latérale côté bord libre de la cuvette ainsi réalisée.

En cas de fissure traversante, ou si une fissure a son fond à moins de 10mm environ de la surface inférieure du coeur, les règles de point d'arrêt et de géométrie d'ouverture sont similaires aux cas précédents. Après ouverture, il n'y a pas de fond et, si la fissure débouche sur un bord libre ou très près d'un bord libre, pas de partie terminale fermée.

Après avoir arrondi les angles de raccordement des flancs de l'ouverture avec la surface inférieure, on soude par points une tôle "de fond" en acier Hadfield d'épaisseur minimum 3mm environ préformée pour former une cuvette peu profonde et qui se raccorde avec les flancs d'ouverture dans le métal de base.

De même pour l'extrémité sur bord libre où on soude par points une tôle "de fermeture terminale" en forme de demi-entonnoir de pente 50° environ, soudure par points solidarisant cette tôle à la fois à la tôle "de fond" précédemment fixée et aux bord libres en métal de base.

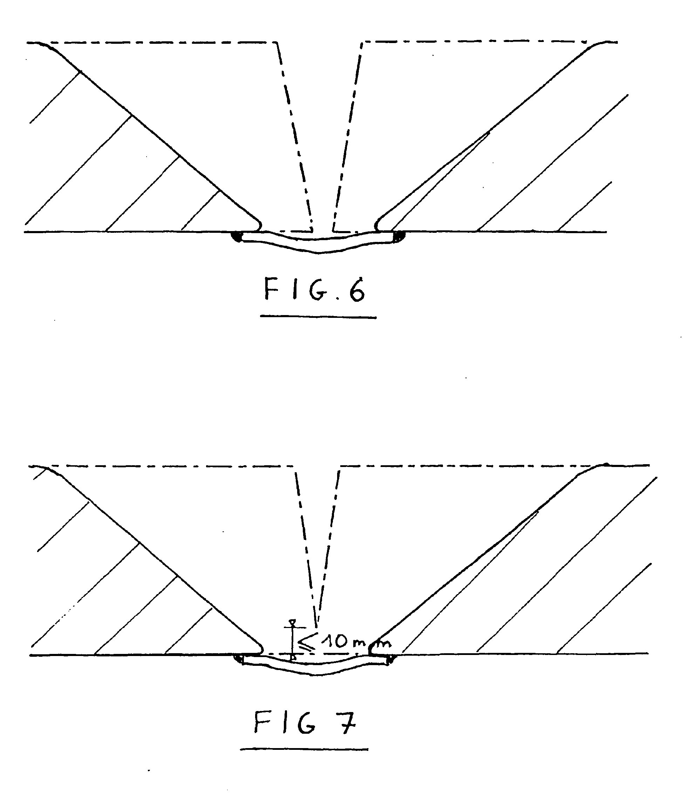

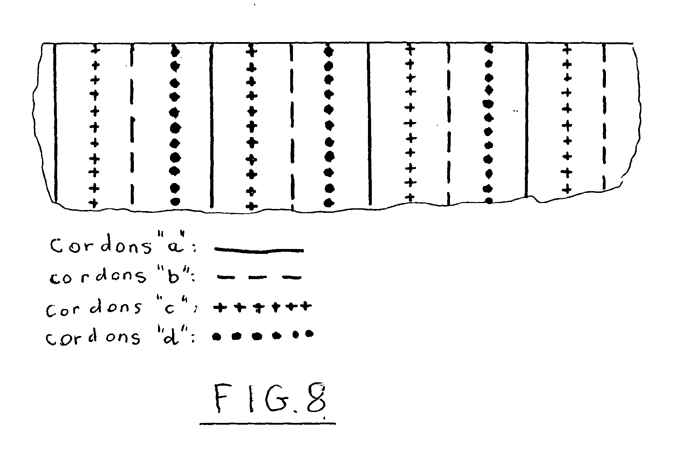

Les figures n°6 et 7 représentent chacune une coupe transversale de la cuvette formée après ouverture et raccordement de la tôle "de fond"; le tracé en traits mixtes représente la géométrie du métal de base avant ouverture avec les 2 cas possibles d'une fissure traversante ou dont la profondeur est à moins de 10mm environ de la surface inférieure.

Les règles de soudage sont similaires dans tous les cas et sont exposées ci-après.

Les zones usées à recharger sont d'abord usinées à faible vitesse de coupe pour uniformiser la surface de départ et enlever si possible la zone écrouie martensitique. L'uniformisation de surface de départ sert essentiellement à faciliter l'utilisation d'un robot de soudure programmé; cet équipement , non indispensable, facilite le respect des schémas calculés d'enchaînements de passes, des vitesses d'avance et de l'énergie de soudure.

Les coeurs sont disposés sur des tréteaux rotatifs afin que la surface de cuvette de réparation de fissure ou de zone usée en cours de rechargement soit toujours en position "à plat" pour la soudure en cours et la surface opposée à la surface en cours de rechargement soit éventuellement arrosée par d'énergiques jets d'eau froide pour limiter l'échauffement du métal de base. Pour avoir une fixation permettant une pose et dépose du coeur avant et après les travaux de soudure très facile et rapide, les tréteaux rotatifs seront avantageusement placés prés des extrémités moulées du coeur, la où le profil est identique à celui d'un rail et par conséquent d'une hauteur constante pour un type de rail. La fixation du coeur sur les tréteaux rotatifs se fait par des attaches rapides classiques, telles que par exemple les sangles à cliquet utilisées pour l'arrimage des charges sur les plateaux de camions.

Il est ensuite procédé au rechargement.

Les cordons de soudure sont ici déposés en respectant les règles suivantes :
- l'énergie de soudure, en courant continu avec le métal de base au pôle négatif (masse), est limitée à 20kJ par centimètre de cordon déposé, ce qui correspond à un bain liquide d'arc le plus petit possible. Cette énergie est constamment contrôlée par mesure de la tension et de l'intensité d'arc.
- la température du métal autour du cordon de soudure est surveillée et maintenue inférieure à 100°C environ et de préférence à 80°C environ au voisinage (2cm environ) des zones en cours de soudure. La température du métal de base sous-jacent ou du métal déjà déposé par soudure est contrôlée soit au moyen de craies thermo-chromes soit par mesure de température infrarouge afin de ne pas dépasser 80°C : si c'est le cas, les opérations de soudure sont alors interrompues dans les zones concernées et on accélère éventuellement le refroidissement en pulvérisant un gaz neutre froid tel que de l'azote en provenance d'une bouteille d'azote liquide.
- le recouvrement par cordons ne se fait que lorsque le cordon précédent est totalement refroidi à la température ambiante.
- le métal d'apport employé, en électrodes pour soudage manuel ou en fil pour soudure MIG semi-automatique, a une composition pondérale de 13 - 1/+6% en manganèse, 3 -0,5/+1,5% en nickel, et inférieure ou égale à 0,8% en carbone. L'acier peut éventuellement comprendre une teneur pondérale en molybdène de 1 -0,5/+0,7%. La teneur en nickel supérieure à 2,5% assure une structure austénitique du cordon de métal déposé lors du refroidissement à l'air ; le nickel et le molybdène favorisent la stabilité de la structure austénitique du métal déposé. Le carbone moins élevé que dans le métal de base diminue le risque de criques.

Pour éviter la déformation et minimiser les tensions au retrait sur le métal de base, les soudures de rechargement sont faites sur de petites longueurs (10cm maximum), "l'axe" de dépôt de ces cordons de soudure est impérativement transversal et la forme du cordon lorsque sa longueur dépasse 6cm est légèrement ondulée comme celle de "s" à très grand rayon de courbure. Les cordons de soudure ne sont pas juxtaposés et on laisse un espacement latéral d'environ 3 fois la largeur du cordon ( soit environ 12 à 20mm ) entre les cordons successifs. Puis on ne revient juxtaposer, avec un certain recouvrement classique en soudure, un nouveau cordon à côté du premier cordon déposé que lorsque celui-ci est totalement refroidi à la température ambiante.

Cette procédure garantit l'absence de déformation : la forme géométrique des coeurs leur assure en effet une rigidité dans le sens transversal très supérieure à la rigidité dans le sens longitudinal.

Les tensions sur le métal de base dues au retrait lors du refroidissement des cordons sont très faibles car les longueurs de cordons déposés sont très courtes.

Un exemple de schéma d'enchaînement des cordons est illustré sur la figure n°8 pour une portion de zone à recharger. Ces zones sont essentiellement la zone triangulaire dite "de pointe" ou "d'abaissement de pointe" dont les dimensions approximatives à recharger sont de 1m de long pour 10 à 15cm de largeur maximum à sa base, et les zones rectilignes ou quasi rectilignes de "pattes de lièvre" sur des longueurs d'approximativement lm et des largeurs de 5 à 6 cm. Pour la commodité de compréhension, sur cette figure 8, seuls sont représentés les "axes" des cordons de dépôt, leur largeur réelle correspondant à une couverture complète de la surface à recharger entre chaque axe de cordon. Les cordons "a" - symbolisés sur la figure 8 par un trait continu - sont déposés en premier, par exemple de la gauche vers la droite, avec un espacement d'environ 3 fois la largeur de cordon, puis lorsque les cordons "a" sont à la température ambiante, les cordons "b"- symbolisés sur la figure 8 par un trait discontinu - sont déposés entre chaque cordon "a" et en reprenant le même ordre de dépôt, c'est à dire de gauche à droite.

Les cordons "c" - symbolisés sur la figure 8 par "+++++" - sont déposés entre les cordons "a" et "b", dans l'ordre de gauche à droite, lorsque les cordons "a" et "b" sont à température ambiante, assurant ainsi avec le recouvrement classique en soudure la création de surfaces "abc". Enfin, lorsque les surfaces "abc" sont à température ambiante, les cordons "d" - symbolisés sur la figure 8 par "......" - sont déposés entre les surfaces "abc", dans l'ordre de gauche à droite, assurant ainsi un recouvrement complet de la zone usée à recharger.

Au cas où plusieurs couches de dépôts sont nécessaires pour retrouver et dépasser les côtes d'origine d'un coeur non usé, la deuxième couche et/ou les autres couches successives sont déposées suivant une procédure identique.

La soudure se fait donc dans des conditions relativement lentes par comparaison avec la soudure d'autres aciers plus facilement soudables ; elle doit même être souvent interrompue pour laisser la pièce se détendre et se refroidir mais ceci n'est pas trop gênant car on peut, en atelier, travailler sur plusieurs coeurs à la fois.

Lorsque les soudures de rechargement sont terminées et après refroidissement complet à la température ambiante, on usine ou on meule les surfaces rechargées pour obtenir des surfaces géométriques identiques à celles d'un coeur neuf. Un pré-écrouissage de la pointe et des pattes de lièvre ou des autres zones circulées rechargées peut ensuite être réalisé, par pressage notamment. La structure de l'acier à haute teneur en manganèse déposé a un grain fin en comparaison avec la taille du grain d'origine correspondant au procédé de fonderie ; ceci entraîne une tenue en service supérieure ou égale à celle du métal de base.

Dans chaque cas, lorsque toutes les soudures sont terminées et refroidies, on procède à la régularisation des surfaces extérieures par usinage ou meulage afin de faciliter les contrôles ultérieurs par ressuage et la surveillance en voie.

Toutes les zones renovées par rechargement sont ensuite radiographiées et ressuées pour s'assurer de l'absence de tout défaut interne ou externe.

La géométrie des dépôts de cordons successifs minimise les contraintes de retrait au refroidissement des cordons, ne crée pas de déformation sensible du coeur rénové et, par sa texture, facilite le comportement de tenue à la fatigue en service dans cette zone rénovée.

Cette réparation peut éventuellement être pratiquée en voie, de manière partielle et surtout pour les fissures dont la géométrie permettra la réparation par soudage "à plat" et en un temps ne dépassant pas les possibilités d'immobilisation du réseau. Le coeur rénové peut alors être utilisé en voie dans les mêmes conditions qu'un coeur neuf et ceci pour un coût le plus souvent inférieur à celui d'un coeur neuf.

L'expérience pratique donne en effet rapidement le coût de réalisation de la réparation des avaries fissurantes en fonction de leur localisation et leur géométrie, ce qui donne les limites économiques du procédé par comparaison avec le coût d'un coeur neuf.

Les coeurs sont le plus souvent économiquement rénovables, malgré les soins nécessaires et les faibles vitesses de dépôt de métal pour assurer un soudage de qualité sans défauts, car les quantités de métal à déposer sont faibles (quelques dizaines de kilogrammes au maximum) et les surfaces à réusiner sont faibles, ce qui explique le coût moindre par rapport à un coeur neuf ; dans les zones détériorées où existaient des imperfections de fonderie, la rénovation supprime ces imperfections.

Le procédé permet le rechargement de zones détériorées telles que des zones usées et/ou comportant une ou des fissures.

Dans le cas de zones usées, le procédé comprend un rechargement par soudure homogène à l'arc électrique réalisant un dépôt d'une ou plusieurs couches d'acier à haute teneur en manganèse par des cordons de soudure très courts et selon un axe transversal au coeur pour garantir l'absence de déformation du coeur et l'absence de formation de défauts fissurants dans le métal de base sous-jacent. Les règles de soudage (espacement et longueur des cordons, température du métal sous-jacent, apport d'énergie et nature du métal de rechargement ...) sont les mêmes que celles exposées ci-dessus. Le rechargement est suivi d'un usinage de remise aux caractéristiques géométriques d'origine.

## Revendications

1. Procédé de rénovation d'un coeur de voie en acier austénitique à haute teneur en manganèse, où le procédé comprend une étape de rechargement d'une zone détériorée (100,200, f) par soudure à Parc et une étape d'usinage pour mettre la zone rechargée aux dimensions d'origine, le rechargement étant réalisé au moyen d'un acier ayant une teneur pondérale :
- de 12 à 19 % en manganèse,
- de 2,5 à 4,5 % en nickel,
- inférieure à 0,8% en carbone, **caractérisé en ce que**
l'acier de rechargement est déposé en cordon (a, b, c, d, y) transversalement à la zone détériorée, et lors du rechargement :
- on mesure la température du coeur autour du cordon de soudure déposé, et, si la température dépasse 100°C, on interrompt la soudure pour faire refroidir le coeur, et éventuellement on accélère le refroidissement,
- on mesure et on contrôle la tension et l'intensité de l'arc en vue de limiter l'apport en énergie à 20 kilojoules par centimètre de cordon déposé.

2. Procédé selon la revendication 1, **caractérisé en ce que**, lorsque la zone détériorée est une zone usée (100, 200), l'acier de rechargement (a, b, c, d) est déposé transversalement à un axe longitudinal du coeur.

3. Procédé selon la revendication 1, **caractérisé en ce que**, lorsque la zone détériorée présente une fissure (f), l'acier de rechargement est déposé en cordon (y) transversalement à la fissure (f) et **en ce que** le procédé comprend les étapes préalables de :
- réaliser un point d'arrêt à proximité de chaque extrémité de fissure,
- élargir la fissure en cuvette de telle manière que la cuvette présente des parois agencées pour minimiser des efforts de tension sur l'acier du coeur et l'acier de rechargement.

4. Procédé selon la revendication 3, **caractérisé en ce que**, lorsque la fissure (f) est traversante ou quasi traversante, le procédé comprend l'étape de fixer sur le coeur une tôle en acier austénitique à haute teneur en manganèse pour former une paroi de la cuvette.

5. Procédé selon la revendication 3 ou 4, **caractérisé en ce que**, la cuvette ayant une largeur maximale supérieure à 8cm environ ou lorsque la teneur pondérale de l'acier en phosphore est supérieure à 0,035% dans la zone de la fissure (f), le procédé comprend l'étape de déposer sur les parois de la cuvette une première couche de cordons de soudure (x) suivant l'axe de la cuvette.

6. Procédé selon l'une quelconque des revendications précédentes, **caractérisé en ce que** :
- chaque cordon (a, b, c, d, x, y) a une longueur développée inférieure à 10cm environ,
- les cordons (a, b, c, d, x, y) sont espacés d'une distance supérieure à 3 fois la largeur d'un cordon,
- un recouvrement partiel ou total entre cordons (a, b, c, d, x, y) est réalisé seulement lorsque le cordon à recouvrir a une température voisine de la température ambiante.

7. Procédé selon l'une quelconque des revendications précédentes, **caractérisé en ce qu**'il comprend une étape de pré écrouissage des zones rechargées.

## Claims

1. A method of renovating a railway frog of high manganese austenitic steel in which the method includes a step of building up a damaged zone (100, 200, f) by arc welding and a step of machining to restore the built-up zone to its original dimensions, the build-up being made using a steel having the following content by weight:
· 12% to 19% manganese;
· 2.5% to 4.5% nickel; and
· less than 0,8% carbon;
the method being **characterized in that** the build-up steel is deposited in beads (a, b, c, d, y) extending transversely across the damaged zone, and during build-up:
·the temperature of the frog around the weld bead being deposited is measured, and if the temperature exceeds 100°C, welding is interrupted to allow the frog to cool, with cooling optionally being accelerated; and
· the voltage and the current of the electric arc are measured and controlled in order to limit the delivery of energy to 20 kJ per centimeter of deposited bead.

2. A method according to claim 1, **characterized in that** when the damaged zone is a worn zone (100, 200), the build-up steel (a, b, c, d) is deposited transversely to a longitudinal axis of the frog.

3. A method according to claim 1, **characterized in that** when the damaged zone presents a crack (f), the build-up steel is deposited as a bead (y) extending transversely across the crack (f), and **in that** the method includes the prior steps of:
· making a stop point close to each end of the crack; and
· enlarging the crack to form a recess so that the recess presents walls arranged to minimize the tension forces on the steel of the frog and the build-up steel.

4. A method according to claim 3, **characterized in that** when the crack (f) is a through crack or a quasi-through crack, the method includes the step of fastening a sheet of high manganese austenitic steel so as to form a wall of the recess.

5. A method according to claim 3 or claim 4, **characterized in that** for a recess having a maximum width than about 8 cm or when the content of phosphorus in the steel is greater than 0.035% by weight in the zone of the crack (f), the method includes the step of depositing a first layer of weld beads (x) on the walls of the recess along the axis of the recess.

6. A method according to any preceding claim, **characterized in that**:
· each bead (a, b, c, d, x, y) has a developed length of less than about 10 cm;
· the beads (a, b, c, d, x, y) are spaced apart by a distance that is greater than three times the width of a bead; and
· partial or total overlap between the beads (a, b, c, d, x, y) is implemented only when the bead for covering is at a temperature close to ambient temperature.

7. A method according to any preceding claim, **characterized in that** it includes a step of preliminary work-hardening the built-up zones.

## Patentansprüche

1. Verfahren zum Renovieren eines Herzstückes eines Gleises aus Austenitstahl mit hohem Mangangehalt, wobei das Verfahren einen Schritt des Auftragens von Stahl auf einen beschädigten Bereich (100, 200, f) durch Lichtbogenschweißen sowie einen Bearbeitungsschritt umfasst, um den Bereich, auf den der Stahl aufgetragen wurde, auf die ursprünglichen Abmessungen zu bringen, wobei das Auftragen mittels eines Stahls erfolgt, der einen Gewichtsanteil hat von:
- 12 bis 19% Mangan
- 2,5 bis 4,5% Nickel,
- unter 0,8% Kohlenstoff, **dadurch gekennzeichnet, dass**
der Stahl zum Auftragen in Form von Raupen (a, b, c, d, y) quer zum beschädigten Bereich aufgetragen wird und dass während des Auftragens:
- die Temperatur des Herzstückes um die aufgetragene Schweißraupe herum gemessen wird, und wenn die Temperatur 100°C übersteigt, das Schweißen unterbrochen wird, um das Herzstück abkühlen zu lassen, und möglicherweise das Abkühlen beschleunigt wird,
- die Spannung und die Intensität des Lichtbogens gemessen und gesteuert wird, um die Energiezufuhr auf 20 Kilojoule pro Zentimeter an aufgetragener Raupe zu begrenzen.

2. Verfahren nach Anspruch 1, **dadurch gekennzeichnet, dass**, wenn der beschädigte Bereich ein abgenutzter Bereich (100, 200) ist, der aufzutragende Stahl (a, b, c, d) quer zu einer Längsachse des Herzstückes aufgetragen wird.

3. Verfahren nach Anspruch 1, **dadurch gekennzeichnet, dass**, wenn der beschädigte Bereich einen Riss (f) aufweist, der aufzutragende Stahl in Form einer Raupe (y) quer zum Riss (f) aufgetragen wird und dass das Verfahren die vorherigen Schritte umfasst:
- Festlegen eines Haltepunktes nahe jedem Rissende,
- Vergrößern des Risses zu einer Wanne derart, dass die Wanne Wände aufweist, die derart ausgebildet sind, dass die auf den Stahl des Herzstückes und den aufzutragenden Stahl ausgeübten Spannungen auf ein Minimum herabgesetzt werden.

4. Verfahren nach Anspruch 3, **dadurch gekennzeichnet, dass**, wenn der Riss (f) durchgehend oder quasi-durchgehend ist, das Verfahren den Schritt des Befestigens eines Bleches aus Austenitstahl mit hohem Mangangehalt an dem Herzstück umfasst, wobei das Blech dazu bestimmt ist, eine Wand der Wanne zu bilden.

5. Verfahren nach Anspruch 3 oder 4, **dadurch gekennzeichnet, dass**, wenn die Wanne eine maximale Breite von über ungefähr 8 cm hat oder wenn der Gewichtsanteil von Phosphor im Stahl größer 0,035% in dem Bereich des Risses (f) ist, das Verfahren den Schritt des Auftragens auf die Wände der Wanne einer ersten Schicht von Schweißraupen (x) in Achsrichtung des Trichters umfasst.

6. Verfahren nach einem der vorhergehenden Ansprüche, **dadurch gekennzeichnet, dass**:
- jede Raupe (a, b, c, d, x, y) eine abgewickelte Länge von unter ungefähr 10cm hat,
- die Raupen (a, b, c, d, x, y) um einen Abstand von mehr als dreimal die Breite einer Raupe beabstandet sind,
- eine Teil- oder Gesamtüberdeckung zwischen Raupen (a, b, c, d, x, y) nur erfolgt, wenn die zu überdeckende Raupe eine Temperatur nahe der Umgebungstemperatur hat.

7. Verfahren nach einem der vorhergehenden Ansprüche, **dadurch gekennzeichnet, dass** es einen Schritt der vorherigen Kaltverfestigung der Bereiche umfasst, auf die Stahl aufgetragen wurde.
